# EUROPEAN PATENT SPECIFICATION

(11) **EP 4 471 384 B1**
(45) Date of publication and mention of the grant of the patent: **05.08.2026**
(21) Application number: 23315223.0
(22) Date of filing: 01.06.2023
(51) Int. Cl.: G01D 11/30, G01D 21/00, H04Q 9/00, H04W 4/38

(54) **APPARATUS FOR MONITORING PROPERTIES OF OR IN ELECTRICAL INSTALLATIONS, HOLDER THEREFOR, AND GATEWAY-DEVICE FOR SUCH APPARATUS, ELECTRICAL INSTALLATION HAVING SUCH APPARATUS AND GATEWAY-DEVICE, AND CORRESPONDING METHODS OF INSTALLING AND OPERATING**
GERÄT ZUR ÜBERWACHUNG VON EIGENSCHAFTEN VON ODER IN ELEKTRISCHEN ANLAGEN, HALTER DAFÜR UND GATEWAY-GERÄT FÜR SOLCHE GERÄTE, ELEKTRISCHE ANLAGE MIT SOLCHEM GERÄT UND SOLCHEM GATEWAY-GERÄT UND ENTSPRECHENDE VERFAHREN ZUR INSTALLATION UND BETRIEB
APPAREIL DE SURVEILLANCE DE PROPRIÉTÉS DE OU DANS DES INSTALLATIONS ÉLECTRIQUES, SON SUPPORT, ET DISPOSITIF DE PASSERELLE POUR TEL APPAREIL, INSTALLATION ÉLECTRIQUE COMPORTANT TEL APPAREIL ET DISPOSITIF DE PASSERELLE, ET PROCÉDÉS D'INSTALLATION ET DE FONCTIONNEMENT CORRESPONDANTS

(43) Date of publication of application: 04.12.2024
(73) Proprietor: HAGER-ELECTRO SAS, 67210 Obernai (FR)
(72) Inventor: Poinsignon, Jean Marc, 57220 FOULIGNY (FR); Schmitt, Oliver, 6020 EMMENBRÜCKE (CH); Schustek, Lucas, 57350 SPICHEREN (FR); Siegrist, Alexander, 6020 EMMENBRÜCKE (CH); Stadelmann, Dominic, 6102 MALTERS (CH)
(74) Representative: Ipsilon

(56) References cited:
- DE-A1- 102020 207 230
- US-A1- 2003 214 399
- US-A1- 2018 183 622
- US-B2- 10 527 523
- SETIAWAN DEDI ET AL: "Experiment and Modeling of Wireless-Powered Sensor Network", 2017 IEEE WIRELESS COMMUNICATIONS AND NETWORKING CONFERENCE WORKSHOPS (WCNCW), IEEE, 19 March 2017 (2017-03-19), pages 1 - 6, XP033093188, DOI: 10.1109/WCNCW.2017.7919071

## Description

Set comprising an apparatus for sensing properties of and in an electrical installation and a holder adapted to be coupled with said apparatus,

### AND CORRESPONDING METHODS OF INSTALLING AND OPERATING

### FIELD OF THE INVENTION

The present invention relates to a set including an apparatus for monitoring properties of and in electrical installations, in particular for monitoring the temperature, humidity, COV and the like, of electrical components in cabinets. The set according to the invention further includes a holder adapted to be coupled with said apparatus, and to methods of installing and operating the apparatus and the holder.

### BACKGROUND

US 2018/183622 A1 relates to a smart home system and an electronic device for establishing the same.

Electrical high-power distribution installations are widely used in manufacturing and commercial sites, factories, hospitals, malls and other public and private infrastructure. These high-power distribution installations are normally secured in closed cabinets to prevent accidental contact with electricity-carrying elements, which could cause severe injury or death, and interruption of the power supply. Electrical high-power distribution installations may distribute high-voltages or high currents. In the following the expression high-power distribution installation is used for any of those variants.

A major threat to continuous and interruption-free operation of high-power electrical installations is found in adverse evolution of enclosure parameters or settings, such as thermal overheating, e.g., due to the high currents flowing and the rather limited convective and radiation cooling provided in closed cabinets, arcing, mechanical vibrations, humidity, presence of foreign objects and animals in the enclosure, and the like. While cooling can be improved by adding forced air flows, local overheating of conductors may still be possible, notably at junctions, interrupters, and suspension points. Likewise, faulty installation, e.g., by loose screw connections, and aging of components may increase the likelihood of overheating, arcing and sensitivity to humidity or mechanical vibration. Overheating may damage or even destroy the high-power electrical installation, which may result in injury to operating personnel, and adversely affect the operation of manufacturing sites or factories.

For this reason, all main electrical components, their connections in electrical installations, and abnormal situations in the enclosure must be regularly checked and serviced without knowing whether they are actually damaged or overstressed. The inspection must be carried out at regular intervals, depending on the risk, such as stress or availability expectation of the electrical component, so that possible faults likely to cause damage to these components can be detected and eliminated in time. Usually, the entire installation must be de-energized for this purpose. In addition, oftentimes cladding parts must be removed to reach the components. This inspection and, if necessary, servicing are time-consuming, and the associated downtime is costly. In some applications, such maintenance-related downtimes are not even an option. Also, inspections at regular intervals cannot reveal any spurious event, including but not limited to foreign objects that may have entered the enclosure, such as insects or small animals, causing an abnormal situation prior to being annihilated and possibly disappearing when being annihilated. When a visual inspection or an inspection using a thermographic camera is performed, the enclosure must be opened. Opening the enclosure can change the thermal distribution within the enclosure, preventing detection of thermal situations that are present in a closed enclosure.

In the prior art, it is known to localize excessive heating of components during operation using thermal imaging cameras. This is associated with hazards for maintenance and operating personnel. Modern electrical distribution installations or systems are constructed in such a way that most electrical components are not even visible or accessible to the thermal imaging camera during operation. For example, electrical busbars are usually concealed by bulkhead plates. Plug-in units and inserts cannot be opened during operation of the electrical installation. Contact hazard protection covers are fitted in front of connection terminal points. Copper and aluminium conductors are usually shielded from the environment with covers made from steel or aluminium, which block any visual inspection. If transparent covers are used, e.g., made from polycarbonate, these have reflective surfaces, possibly falsifying measurements made with thermographic cameras. To nevertheless be able to take thermal images of the components, doors, side and rear panels of distribution systems, or electrical installations in general, encapsulated in this way must be opened. This causes the interior temperature of the electrical installation to drop very sharply, which has an indeterminable influence on the measurement. For these reasons, the conclusiveness of this technique is very limited.

Another disadvantage of thermal image observation is that different loads draw their maximum energy over observed lines and connections at different times. Monitoring this involves even more effort, because the maximum current value and the time at which this current flows would have to be determined for each connection. Measurements would then have to be made at these times. This is not feasible in practice, which further limits the application of this method.

Another disadvantage results from the fact that extraordinary conditions, such as in particular short circuits, short-time overload, irregular harmonic load, etc., cannot be detected with this method, although these phenomena further stress the lines and their connections in addition to the operating current. As a result, the aging processes in these lines and connections are accelerated unbeknownst to the operator of the installation. Also, due to being blind to the varying operating conditions in the cabinet or enclosure these are typically oversized in order to provide acceptable operating conditions under most circumstances.

### SUMMARY OF THE INVENTION

The invention is defined by a set including an apparatus, i.e. first aspect of the invention, for sensing properties of and in electrical installations comprises a housing, in which at least one sensor is arranged. A first wireless interface connected to an antenna is arranged in the housing. The first wireless interface is adapted to wirelessly receive electrical energy and to wirelessly transmit a signal representing a property measured by the sensor. The housing has a mechanical interface, e.g., an opening, that is adapted to receive or be coupled with a corresponding coupling section of a holder adapted for coupling with the mechanical interface, e.g., for insertion into the opening, which holder is the sole mounting or fixation point of the housing in the electrical installation. The fixation provided by the mechanical interface may be permanent or removable. In some embodiments a portion of the section adapted for insertion protrudes into the housing through the opening. In this context adapted for insertion may comprise matching size and shape and may also comprise a feature limiting insertion depth. The mechanical interface is further arranged to provide access and/or functional contact, of the coupling section of the holder coupled with the housing, with the at least one sensor. For example, when the mechanical interface is an opening in the housing, the coupling section of the holder received in the opening in the housing gains access to and can establish functional contact with the sensor. In this context functional contact refers to a contact that transfers the property measured by the sensor, i.e., the mechanical interface between the holder and the apparatus acts as a conducting element for the measured property. For example, when the sensor is measuring a temperature, the opening may be positioned to permit the coupling section of the holder received in the housing to come into contact with a surface of the sensor, acting as a thermal conductor. It is noted that additional means may be provided for establishing or improving the functional contact, in the previous example, e.g., thermal conductive paste or pads, or the like. Other means may be structural in nature, e.g., resilient or flexible structures or elements that ensure proper contact between the sensor and the mechanical interface. It is obvious that the mechanical interface may also be adapted to provide access and/or functional contact with sensors that are located at an outer surface of the housing.

The apparatus may further comprise a microprocessor, volatile and non-volatile memory. The non-volatile memory stores computer program instructions which, when executed by the microprocessor in the volatile memory, configure the apparatus to execute one or more steps of methods in accordance with the sixth and/or seventh aspect not part of the claimed invention described further below.

In one or more embodiments of the apparatus the mechanical interface is arranged to provide access, and/or contact, of the first wireless interface to an antenna provided on or with the holder, through the coupling section of the holder received in the housing. This feature may be advantageous in case the housing shields electromagnetic radiation, preventing the proper functioning of an antenna if it were located inside the housing, or in case the housing of the apparatus needs to be oriented in a way that an internal antenna has a sub-optimal orientation towards a gateway device it communicates with. Alternatively, or in addition, the holder can establish a connection for the first wireless interface to a ground plane or ground connection, e.g., for an antenna that may be located inside the housing.

In one or more embodiments of the apparatus the housing further comprises an indicator configurable to indicate a property of a wireless connectivity established with the first wireless interface. The indicator may be implemented as an indicator light, which lights up whenever field strength of the wireless connection exceeds a predetermined threshold. A sufficiently high field strength may be used as an indication that a data connection will likewise be properly operative.

In one or more embodiments the apparatus further comprises an identification that can be used for communicatively addressing the apparatus via the first wireless interface. The identification may be provided by the apparatus in response to receiving electrical energy via the first wireless interface, e.g., in regular intervals or at specified instants, such as upon initially receiving electrical energy via the first wireless interface. The latter may be particularly useful in case the electrical energy is not permanently provided through directed electromagnetic radiation, e.g., by means of beamforming or intermittent polling. Beamforming may be employed by a gateway device in accordance with another aspect not part of the claimed invention that will be presented further below. Beamforming may provide selective sequential addressing of individual apparatus by directing the electrical energy required for powering such individual apparatus to selected apparatus, omitting other apparatus. The identification, and communication of other data, may be provided while wirelessly receiving electrical energy, e.g., by modulating the impedance of the antenna, which will be detectable at the transmitter.

In one or more embodiments of the apparatus the sensor is a temperature sensor, a humidity sensor, an airflow sensor, a motion sensor, a sensor for detecting volatile organic components (VOC), e.g., resulting from gassing out from plastic materials or paint at elevated temperatures, a lambda sensor, or a sensor for electric and/or magnetic fields. In case of a humidity sensor or an air-flow sensor an active sensing part may be placed to face outwards of the housing, or a duct may be provided for passing air by the active sensing part of the sensor. Depending on the type of sensor and the sensed property, in one or more embodiments the housing is made from an open-porous material. This material may be open for fluids, like air or water. While the housing will preferably be made of a non-conducting material that is not shielding against electromagnetic radiation it may, in some embodiments at least partially have shielding properties against electromagnetic radiation, e.g., for providing a reflector for an antenna located inside the housing, or when an external antenna is provided. In any case, the housing will be designed so as not to have a negative impact on the receiving and transmitting elements and functions of the apparatus.

In one or more embodiments of the apparatus the housing is made from a transparent material or has a window made from a transparent material, and the sensor is a light-sensitive sensor or a motion sensor. A light-sensitive sensor may comprise a photosensitive element, such as a photodiode or a phototransistor, or a material or device that changes its conductivity when lit, preferably maintaining the changed conductivity for some time after being lit. The latter may permit "storing" a brief exposure to light for a certain time, e.g., when short arcing occurs, which may be useful in systems in which multiple sensors are read out sequentially. However, arcing may also be detected by sensors for electromagnetic radiation. A motion sensor may use infrared light for detecting motion.

According to the invention, the set further includes a holder, i.e. second aspect of the invention, adapted to be coupled with apparatus according to the first aspect described hereinbefore comprises at least one attachment element configured for mounting or attaching the holder to a component of an electrical installation, and further comprises a coupling section adapted for coupling with an interface of a housing of the apparatus. The coupling section adapted for coupling with the interface may take the form of a tab, a blade, a pin, or the like, which is inserted into the housing, e.g., when the interface of the housing comprises an opening. The size and shape of the coupling section depends on the size and shape of the interface, and both may be different for different types of sensors. This may help properly matching holders and apparatus in accordance with so-called poka-yoke methods, for ensuring safe and proper operation.

In one or more embodiments the holder comprises an antenna and one or more contact elements connected with the antenna, for providing contact of the antenna with the first wireless interface of the apparatus. This type of holder may be beneficial when the housing is made from a material shielding electromagnetic waves.

In one or more embodiments of the holder the at least one attachment element is arranged to receive and be removably locked onto a structural element of the electrical installation, or to be removably attached to a surface thereof. Locking onto or attaching may comprise applying mutually opposing forces onto the structural element, i.e., clamping, or using magnetic force, but also interlocking elements or removable adhesives. The interlocking elements may be arranged to form-fit with structural elements, e.g., heads of screws, or nuts of the electrical installation.

In one or more embodiments of the holder the at least one attachment element comprises two attachment sections extending from opposite ends of a connecting section. At least one of the attachment sections is arranged to lock onto the structural element of the electrical installation and/or provided with means for exerting a force acting towards the respective other attachment section. The means may, e.g., comprise a screw, or generally at least partially resilient and flexible attachment sections.

In one or more embodiments of the holder at least a portion of the coupling section adapted for coupling with the interface of the housing, or of a part or an element of the holder connecting the attachment element and the coupling section adapted for coupling with the interface of the housing, is manually deformable or movable. Alternatively, the coupling section may be configured to movably couple with the mechanical interface of the housing or with a mechanical coupling structure of a coupling element to which the housing is ultimately mounted. This advantageously permits orienting an apparatus held by the holder for improving a wireless connection with a gateway device and/or for placing the sensor of the apparatus in a position that improves sensing of a property.

According to the invention, the coupling section of the holder is adapted for coupling with the interface of the housing and is arranged to transfer or conduct a monitored property from outside of the housing to the at least one sensor inside of the housing. For example, the holder may conduct heat from a mounting point of the holder in an electrical installation to a sensor inside the housing. Other variants may accomplish transferring or conducting a measured property by using a conducting element, e.g., conduct light by means of optical fibres, or humidity or liquids by means of a wick-like structure provided on or in the holder. Heat transfer may be improved by using a corresponding conducting element, which may even comprise a heat shield that improves the accuracy and response time. Transferring or conducting a measured property may advantageously decouple the orientation of the housing from the attachment point, which may, inter alia, be used for obtaining an improved wireless connection.

Due to the innovative and versatile coupling between the holder and the sensor the proposed apparatus can be easily installed in different locations of an electrical installation. The easy and flexible installation of the sensors facilitates placing sensors in critical areas, which may be different depending on each electrical installation. This also permits easy retrofitting or upgrading of existing electrical installations, which are often operated over several decades, and which may not have been equipped with sensors at the time of initial commissioning.

In accordance with a third aspect not part of the claimed invention a gateway-device cooperating with one or more apparatus in accordance with the first aspect of the invention comprises a microprocessor, volatile and non-volatile memory, and a second wireless interface that is adapted to provide electrical energy to first wireless interfaces of one or more of such apparatus. The non-volatile memory stores computer program instructions which, when executed by the microprocessor in the volatile memory, configure the gateway-device to execute methods in accordance with the sixth and/or seventh aspects of the invention.

In one or more embodiments the gateway-device is provided with two or more antennas coupled to the second wireless interface, and wherein the gateway device is configured to perform beamforming for directionally transmitting energy and data, and for directionally or non-directionally receiving data. Beamforming may, for example, be used for selectively communicating with one of a plurality of apparatus according to the first aspect of the invention.

In one or more embodiments the gateway-device comprises a third interface, wire or wireless, configured for communicating with a mobile device operable to make available at least an information correlated to a field strength or a quality of a wireless connection between the first interface of the apparatus according to the first aspect of the invention and the second interface of the gateway-device according to the third aspect not part of the claimed invention. Making available may comprise providing information on a display and/or providing acoustic information.

In accordance with a fourth aspect not part of the claimed invention a system for monitoring properties of and in electrical installations comprises at least one apparatus in accordance with the first aspect of the invention, and further comprises a gateway-device in accordance with the third aspect not part of the claimed invention. The system may further comprise a holder in accordance with the second aspect of the invention.

In accordance with a fifth aspect not part of the claimed invention an electrical installation comprises a system in accordance with the fourth aspect not part of the claimed invention.

In accordance with a sixth aspect of the invention a method of installing an apparatus in accordance with the first aspect of the invention in an electrical installation in accordance with claim 1 comprises positioning the apparatus in or next to a location in the electrical installation, in which a property of or in the electrical installation is to be monitored and providing, via a second interface of a gateway-device in accordance with the third aspect not part of the claimed invention, electrical energy to the apparatus, which receives the electrical energy via its first wireless interface. The method further comprises determining, in the apparatus or in the gateway-device, a field strength and/or a quality of the wireless connection and providing, by the apparatus or by or via the gateway-device, an providing an indication whenever the field strength and/or the quality of the wireless connection exceeds a predetermined value or level. Whenever the field strength and/or the quality of the wireless connection between the apparatus and the gateway-device, lie below the predetermined value or level, the method further comprises modifying an orientation of the apparatus and/or a holder in accordance with the second aspect of the invention in the electrical installation and/or modifying the position of the apparatus and/or the holder in the electrical installation, until the field strength and/or the quality of the wireless connection between the apparatus and the gateway-device, exceeds the predetermined value or level. While modifying the indication is monitored for identifying a location and/or orientation which provides a satisfactory wireless connection.

In one or more embodiments, in which the indication is provided via the gateway-device, the indication is provided by an indicator provided with the gateway-device. Alternatively, or in addition, the indication is forwarded, by the third interface, to a further device that is provided with a corresponding indicator, e.g., an optical indicator element or an indicator shown on a display.

In accordance with a seventh aspect not part of the claimed invention a method of operating a system in accordance with the fourth aspect not part of the claimed invention comprises operating a gateway-device in accordance with the third aspect not part of the claimed invention to wirelessly provide electrical energy to an apparatus in accordance with the first aspect of the invention.

Optionally, the gateway-device may also transmit data to the apparatus, e.g., a request to transmit sensor data, along or in temporal connection with providing electrical energy. In case no data is transmitted to the apparatus, the apparatus may be configured to transmit upon wirelessly receiving electrical energy. Wireless protocols for detecting a busy channel may be provided in the apparatus.

Wirelessly transmitting electrical energy and data may comprise controlling two or more antennas of the gateway-device to perform a beamforming operation, for directionally transmitting and receiving.

The method further comprises receiving, from the apparatus, sensor data representing a sensed property of an electrical installation in which the system is installed. The received sensor data may be transmitted, via a third interface of the gateway-device, to a further device, e.g., a control station or a storage. Optionally, the received sensor data may be evaluated in the gateway-device, and the result of the evaluation may be transmitted, via the third interface of the gateway-device, to the further device.

The methods of transmitting and/or receiving may be represented by computer program instructions which, when executed by a microprocessor in an associated volatile memory, configure the microprocessor and/or control hardware components of an apparatus or of a gateway device as presented hereinbefore, respectively, to execute one or more steps of the method of installing or of the method of operating as presented hereinbefore, respectively.

The computer program instructions may be retrievably stored or transmitted on a computer-readable medium or data carrier. The medium or the data carrier may by physically embodied, e.g., in the form of a hard disk, solid state disk, flash memory device or the like. However, the medium or the data carrier may also comprise a modulated electro-magnetic, electrical, or optical signal that is received by computer by means of a corresponding receiver, and that is transferred to and stored in a memory of the computer.

The invention advantageously provides a means for continuously monitoring properties of electrical installations, and also permits retrofitting existing electrical installations with little effort. Precise monitoring of the behaviour of components in the enclosure also permits gaining insight that enables reducing the size of enclosures or modifying the layout thereof in future electrical installations, while still complying with normative requirements.

### BRIEF DESCRIPTION OF THE DRAWING

In the following section exemplary embodiments of the invention will be described with reference to the drawing, in which
- Fig. 1: shows a simplified block diagram of an exemplary apparatus in accordance with the first aspect of the invention,
- Fig. 2: shows an exemplary housing of the apparatus in accordance with the first aspect of the invention,
- Fig. 3: shows various views of a first exemplary embodiment of a holder in accordance with the second aspect of the invention,
- Fig. 4: shows an exemplary apparatus in accordance with the first aspect of the invention mounted on the first exemplary embodiment of a holder in accordance with the second aspect of the invention shown in figure 3,
- Fig. 5: shows various views of a second exemplary embodiment of a holder in accordance with the second aspect of the invention,
- Fig. 6: shows an exemplary apparatus in accordance with the first aspect of the invention mounted on the second exemplary embodiment of a holder in accordance with the second aspect of the invention shown in figure 5,
- Fig. 7: shows various views of a third exemplary embodiment of a holder in accordance with the second aspect of the invention,
- Fig. 8: shows an exemplary apparatus in accordance with the first aspect of the invention mounted on the third exemplary embodiment of a holder in accordance with the second aspect of the invention shown in figure 7,
- Fig. 9: shows an exploded view of a fourth exemplary embodiment of a holder in accordance with the second aspect of the invention,
- Fig. 10: shows a first oblique side view of the attachment element and the first mechanical coupling structure of figure 9,
- Fig. 11: shows a second oblique side view of the attachment element and the first mechanical coupling structure of figure 9,
- Fig. 12: shows a perspective view of an underside of the attachment element and the first mechanical coupling structure of figure 9,
- Fig. 13: shows an attachment element of a fifth exemplary embodiment of a holder in accordance with the second aspect of the invention,
- Fig. 14: shows an exploded view of a variant of a first mechanical coupling structure and a conducting element,
- Fig. 15: shows an exploded view of first mechanical coupling structure and the conducting element of figure 14 ready for insertion into the attachment element of figure 13,
- Fig. 16: shows different views of further variants of the first mechanical coupling structure that can be used in connection with the attachment element of figure 13,
- Fig. 17: shows a first perspective view of the coupling element shown in figure 9 and the second mechanical coupling structure provided therein,
- Fig. 18: shows, a second perspective view of the coupling element shown in figure 9 and the third mechanical coupling structure provided therewith,
- Fig. 19: shows an exemplary support element adapted for interfacing with or attaching to the third mechanical coupling structure of the coupling element shown in figures 9, 17 and 18,
- Fig. 20: shows a simplified block diagram of a gateway device in accordance with the third aspect not part of the claimed invention,
- Fig. 21: shows a schematic overview of a system for monitoring properties of an in electrical installations in accordance with the fourth aspect not part of the claimed invention,
- Fig. 22: shows an exemplary electrical installation being equipped with an apparatus in accordance with the first aspect of the invention, and a detail thereof,
- Fig. 23: shows a flow diagram of an exemplary method in accordance with the fifth aspect not part of the claimed invention of installing an apparatus in accordance with the first aspect of the invention in an electrical installation, and
- Fig. 24: shows a flow diagram of an exemplary method in accordance with the sixth aspect of the invention of operating a system in accordance with the fourth aspect not part of the claimed invention.

In the figures, identical or similar elements may be referenced using the same reference designators.

### DESCRIPTION OF EMBODIMENTS

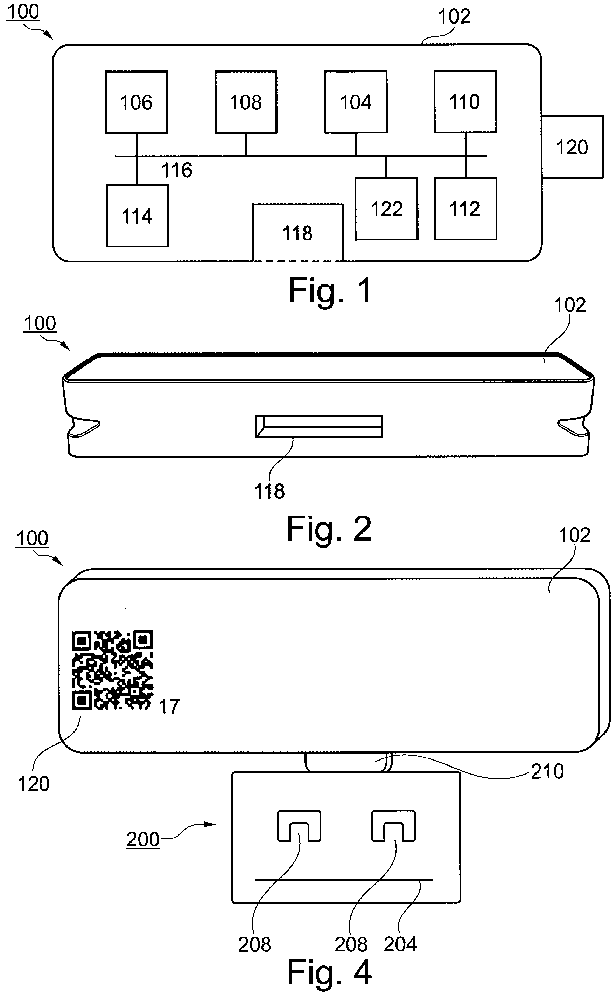

Figure 1 shows a simplified block diagram of an exemplary apparatus 100 in accordance with the first aspect of the invention. A sensor 104, a first wireless interface 106, an antenna 108, a microprocessor 110, volatile memory 112 and non-volatile memory 114 are connected via one or more signal or data lines or buses 116. The aforementioned elements are arranged in a housing 102, which has a mechanical interface 118, e.g., an opening. Mechanical interface 118 is adapted to be coupled with a coupling section 210 of a holder 200 (not shown in the figure). Holder 200 is the sole mechanical mounting point of the housing 102. Sensor 104 and/or antenna 108 may be arranged close to the mechanical interface 118 and may be in electrical or other contact with holder 200 or a section or portion thereof (not shown in the figure). An identification may be provided external to the housing, e.g., identifier 120 that can be read out optically or visually, or by any other means. Alternatively, the identifier may be read out wirelessly, e.g., in the form of an NFC tag or the like. The identifier 120 may be separate from other electronic or functional components of the apparatus 100 and may be logically linked to the other electronic or functional components of the apparatus 100 through a reference list or look-up table. Further, an indicator 122 may be provided for indicating a property of a wireless connection established with the first wireless interface 106, e.g., a light emitting element that lights up when the apparatus receives sufficient electrical energy for operation via the first wireless interface 106.

Figure 2 shows an exemplary housing 102 of the apparatus 100 in accordance with the first aspect of the invention. The exemplary housing 102 shown in the figure has a shape of a general parallelepiped, although other shapes are likewise possible. Exemplary housing 102 has a mechanical interface 118, in the figure in the form of an opening, that is adapted to be coupled with a section of a holder 200 (not shown in the figure). It is obvious that the mechanical interface may take other forms or shapes.

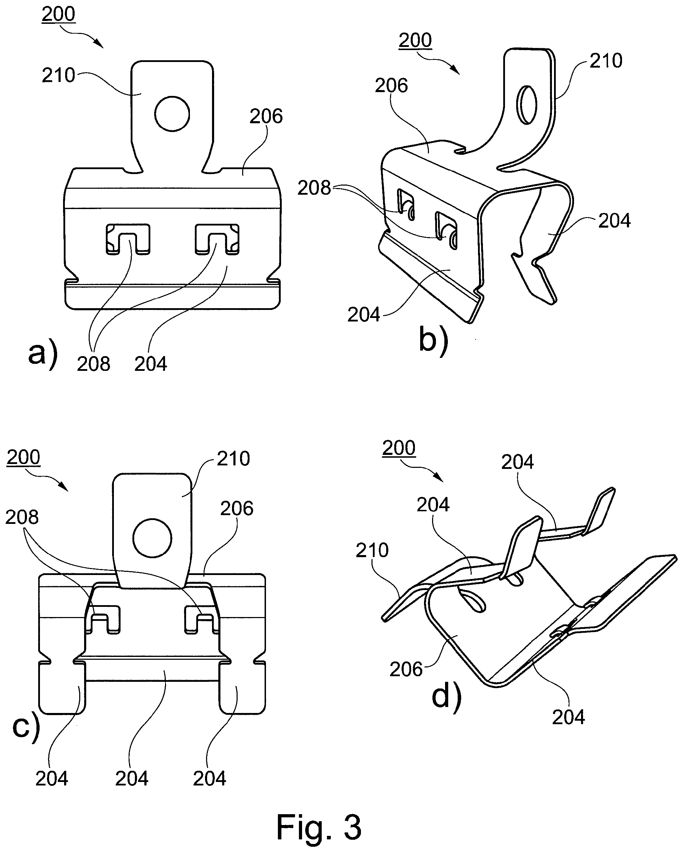

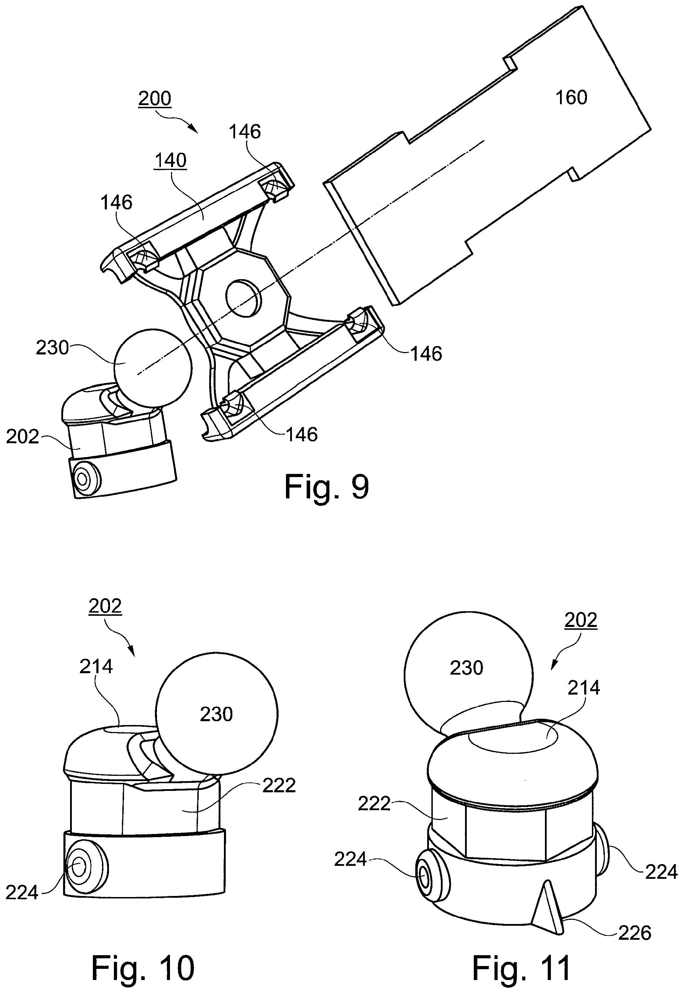

Figure 3 shows various views of a first exemplary embodiment of a holder 200 in accordance with the second aspect of the invention. The holder has an attachment element 202 which, in this embodiment, has the general form of a clamp or a bracket, i.e., comprises two opposed sections 204 are connected by a bridge section 206. The opposed sections 204 may each form one essentially single section, as visible in figure 3 a), or may comprise multiple subsections acting together, as shown in figures 3 c) and d). The holder 200 is preferably made from a resilient material, e.g., metal or plastic, and the bridge section 206 is dimensioned so as to permit attachment of the holder 200 onto a bar-like structure that has similar dimensions. The ends of the opposed sections 204 may be bent away from each other, facilitating positioning the holder over the bar-like structure. Portions of the opposed 204 sections may be bent towards the respective other section, providing a locking element 208. A coupling section 210 adapted for coupling with the mechanical interface 118 of housing 102 of the apparatus 100 extends from the bridge section 206. This coupling section 210 may be at last partially deformable, e.g., for adjusting the orientation of the apparatus 100 once it is mounted on the holder 200. To this end the coupling section 210 may have a part having a reduced width or diameter, which reduces the force required for orienting the apparatus 100 mounted on the holder 200. A further solution permitting adjusting the orientation of the apparatus 100 is shown with reference to figures 9 to 19 further below.

Figure 4 shows an exemplary apparatus 100 in accordance with the first aspect of the invention mounted on the first exemplary embodiment of a holder 200 in accordance with the second aspect of the invention shown in figure 3. Coupling section 210 of holder 200 is coupled with the interface 118 of housing 102, i.e., inserted into the opening, leaving the opposed sections 204 of the holder visible and accessible.

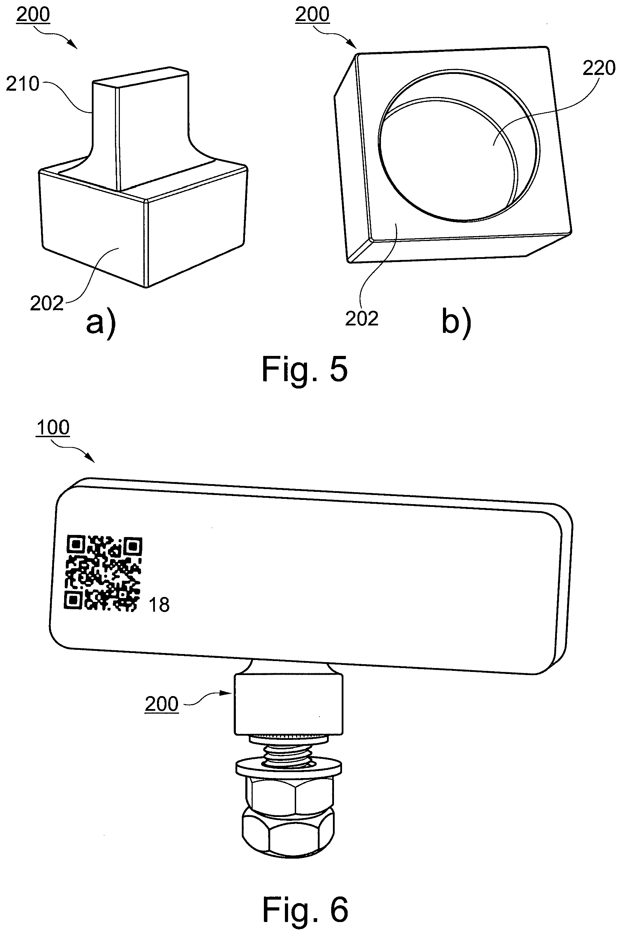

Figure 5 shows various views of a second exemplary embodiment of a holder 200 in accordance with the second aspect of the invention. The holder 200 has an attachment element 202 that is configured to be placed on a protrusion, e.g., a bolt or a screw head or thread. In the figure the attachment element 202 has a recess 220 that is configured to receive such bolt or screw head or thread. The recess 220 may have a circular shape, permitting a rotation on the screw head or thread, or bolt received therein, thus facilitating orientation of the apparatus 100 mounted on the holder 200. The diameter of the recess 220 may correspond to the largest dimension of the bolt or screw head or thread, for providing proper fixture, or may be slightly smaller than the largest dimension of the bolt or screw head. In the latter case the holder 200 is preferably made from an elastic or at least plastic material or has elastic or plastic features for receiving the bolt or screw head. Alternatively, a thread may be provided in the recess 220 that matches a thread of a screw on which the holder is to be mounted. Like the holder 200 shown in figure 3 the holder 200 of figure 5 has a coupling section 210 adapted for coupling with the interface 118 of housing 102 of the apparatus 100.

Figure 6 shows an exemplary apparatus 100 in accordance with the first aspect of the invention mounted on the second exemplary embodiment of a holder 200 in accordance with the second aspect of the invention shown in figure 5. Like described before with reference to figure 4 coupling section 210 of holder 200 is coupled with the interface 118 of housing 102, i.e., inserted into the opening, leaving the attachment element 202 of the holder visible and accessible. In the figure the holder is placed on a screw head.

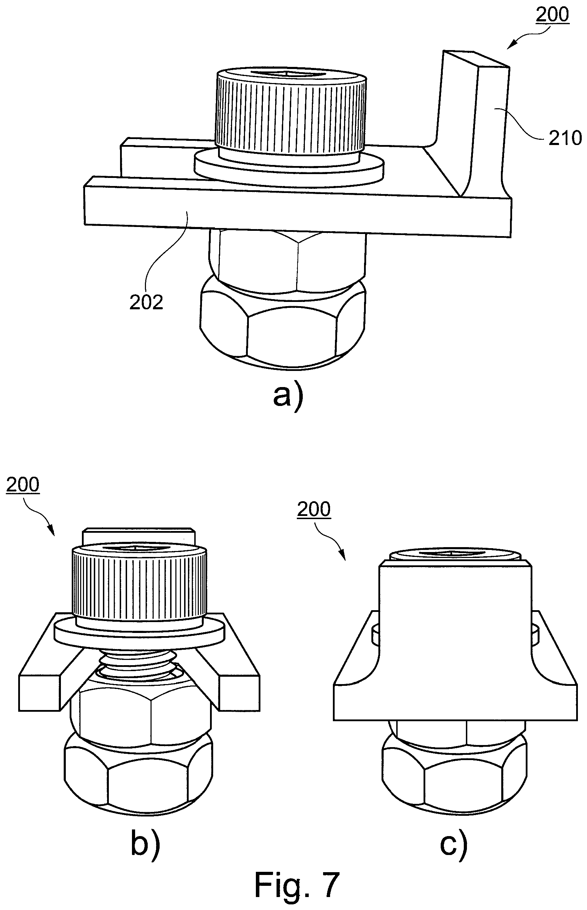

Figure 7 shows various views of a third exemplary embodiment of a holder 200 in accordance with the second aspect of the invention. The attachment element 202 of the holder has two prongs spaced apart from each other which provide a cut-out that may receive a screw shaft or the like. The attachment element 202 may be fixed using the screw or a nut mounted thereon, preferably using washers for preventing damaging the holder and enlarging the area of contact. It is also possible to use a rivet or similar mounting element to fix the holder 200 to a structure. Like the holders shown in figures 3 and 5 the holder of figure 7 has a coupling section 210 adapted for coupling with the interface 118 of housing 102 of the apparatus 100.

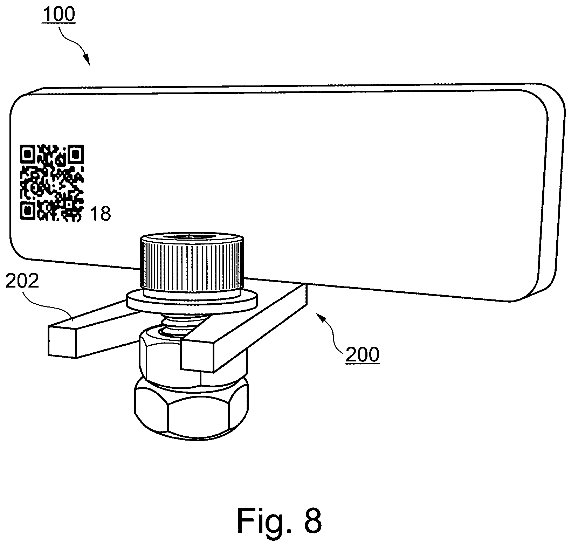

Figure 8 shows an exemplary apparatus 100 in accordance with the first aspect of the invention mounted on the third exemplary embodiment of a holder 200 in accordance with the second aspect of the invention shown in figure 7. Like described before with reference to figures 4 and 6 coupling section 210 of holder 200 is coupled with the interface 118 of housing 102, i.e., inserted into the opening, leaving the attachment element 202 of the holder visible and accessible.

Figure 9 shows an exploded view of a fourth exemplary embodiment. The attachment element 202 of the holder corresponds, in principle, to the one shown in figure 5, i.e., attachment element 202 is configured to be placed on a protrusion, e.g., a bolt or a screw head or thread. Details of the attachment element 202 will be provided further below. A first mechanical coupling structure 230, here a ball head, is connected with the attachment element 202. The first mechanical coupling structure 230 is configured to couple with a corresponding second mechanical coupling structure 142, which may be a part of the interface 118 of the housing 102 of the apparatus 100, or of a separate coupling element 140 that is affixable to the housing 102 of the apparatus.

The coupling element 140 shown in the figure comprises the second mechanical coupling structure 142 that is shaped for proper coupling with the first mechanical coupling structure 230, i.e., is shaped to receive and hold the ball head exemplarily shown in the figure, and a third mechanical coupling structure 146 that is shaped for mechanically interfacing with and holding the housing 102 of an apparatus 100 or a support element 160, to which the housing 102 can be mounted, e.g., via adhesives or screws. Accordingly, the support element 160 or the housing 102 have corresponding fourth mechanical coupling structures that are shaped for attaching to or interfacing with the third mechanical coupling structure 146. The third mechanical coupling structure 146 may comprise resilient snap hooks that engage with rims, ridges or recesses of the housing 102 or the support element 160, which may form or be part of the fourth mechanical coupling structure.

Figure 10 shows a first oblique side view of the attachment element 202 and the first mechanical coupling structure 230 of figure 9. In the figure an external hexagonal section 222 is visible, which may internally have a corresponding hexagonal shape for coupling with a hexagonal screw head or nut to which the holder 200 is mounted.

A wrench may be used for tightening and/or loosening the screw or nut, or for checking proper fastening torque thereof. A securing arrangement 224 is provided for securely fixing the attachment element 202 to the screw or nut.

Figure 11 shows a second perspective view of the attachment element 202 and the first mechanical coupling structure 230 of figure 9. In the figure the external hexagonal section 222 is better visible. Further, an indicator 226 is shown, which may be used for indicating any unwanted change in the position of the holder 200 or the attachment element 202, and/or a loosening of the screw head or nut the attachment element 202 is mounted to.

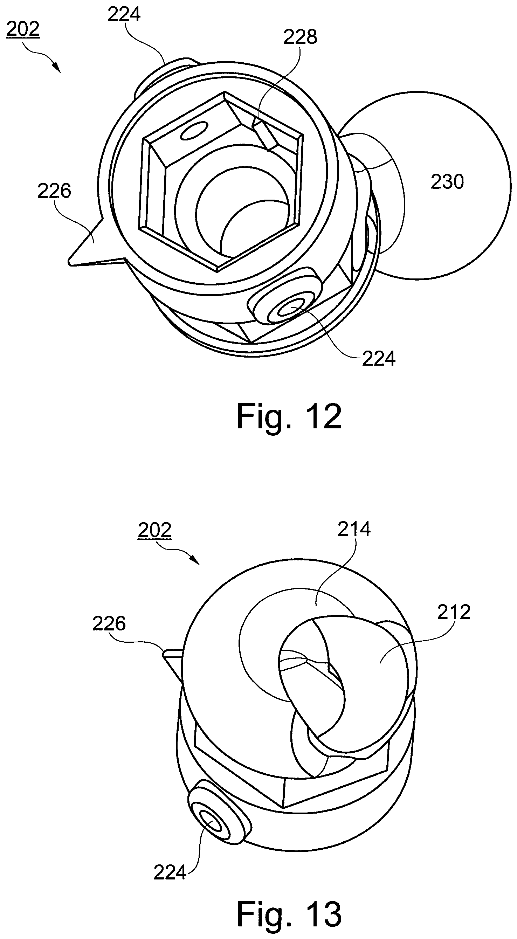

Figure 12 shows a perspective view of an underside of the attachment element 202 and the first mechanical coupling structure 230 of figure 9. In the figure the internal hexagonal shape is visible, which may couple with the screw head or nut to which the attachment element 202 is mounted. The securing arrangement may comprise threaded holes, preferably arranged opposingly, which receive screws that are tightened against the screw head or nut the attachment element 202 is mounted to. One or more ridges 228 may be provided in the internal hexagonal shape, which may further aid securing the attachment element 202 on the screw head or nut. The one or more ridges 228 may deform when forced onto the screw head or nut, or may cut into the screw head or nut, preventing any unwanted rotation of the attachment element 202 against the screw head or nut. The securing arrangement and the ridged may be provided as alternatives or in conjunction. The attachment element 202 may be forced on the screw head or nut by applying a force on a surface 214 shown in figures 10 and 11, e.g., using a hammer, a mechanical or hydraulic press, or the like.

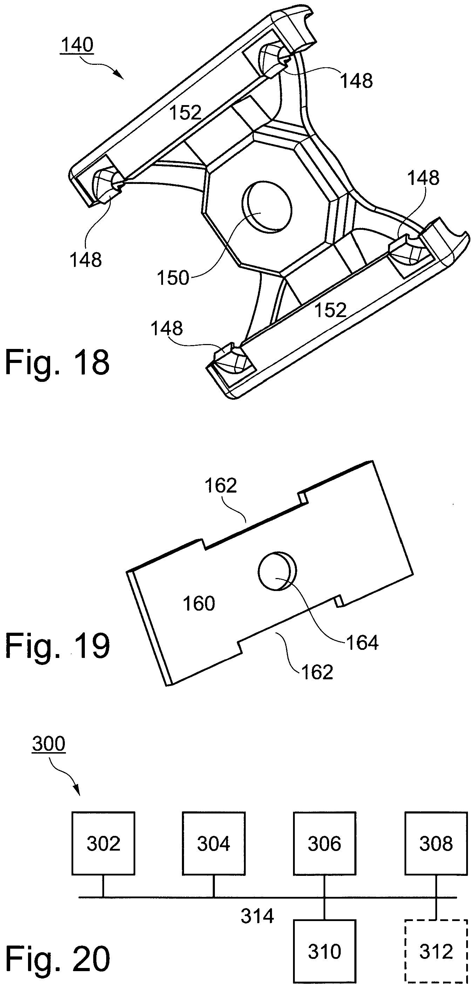

Figure 13 shows an attachment element 202 of a fifth exemplary embodiment of a holder 200 in accordance with the second aspect of the invention. The attachment element 202 has a hole 212. Hole 212 may receive an attachment section 236 of a component comprising a first mechanical coupling structure 230 (not shown in the figure). The attachment section 236 may be smooth or threaded, as shown in figures 19, 20 or 21.

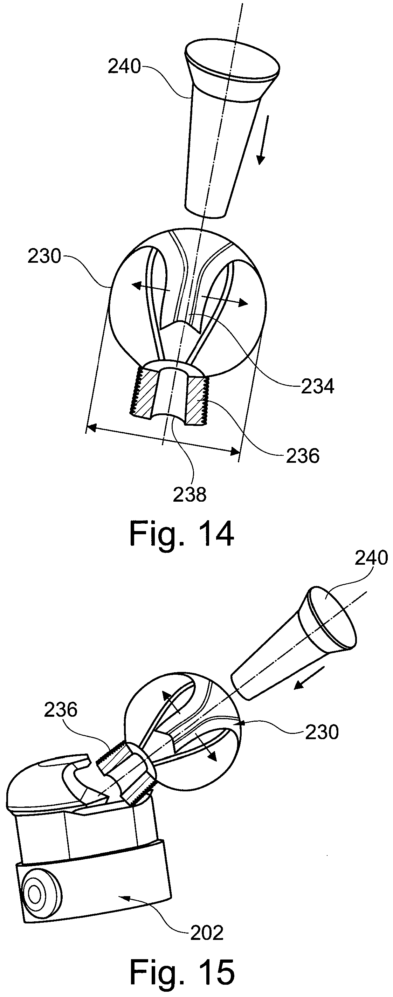

Figure 14 shows an exploded view of a variant of a first mechanical coupling structure 230 and a conducting element 240, for use with the attachment element 202 of figure 13. The first mechanical coupling structure 230 has a hollow shape similar to a half-sphere with a first guide element 234 that originates at the top of the half-sphere and is bent inwards, preferably in a smooth curve at the top. At least the innermost portion of the first guide element 234 is arranged parallel to a diameter of the hypothetically completed sphere, and portions thereof may be arranged concentrical to the diameter. An attachment section 236 is provided opposite to the top of the first mechanical coupling structure 230. Attachment section 236 may have a through-hole 238, permitting passing of the conducting element 240 through the first mechanical coupling structure and, thus, permitting precise placement of an end of the conducting element 240, e.g., at the lower end of the attachment section 236 or even outside thereof. A first end of the conducting element 240 may, e.g., be close to or in contact with the screw head, nut or thread the attachment element 202 is mounted to. A second end of the conducting element 240 faces towards the apparatus 100 and may pass through first mechanical coupling structure 230 and the coupling element 140, and possible even through the housing 102, for making contact with a sensor 104 of the apparatus 100, e.g., when the sensor 104 has no direct contact surface at the outside of the housing 102. The conducting element 240 may provide better conducting properties for any measured parameter than using the attachment element 202, the first mechanical coupling structure 230 and the coupling element 140 for conducting the measured parameter, or may provide a more specific measuring location than is possible by using the entire holder 200 as a conductor for the measured parameter.

The conducting element 240 may have a more or less conically shaped section, which exerts a force on the first guide element 234 and, consequently, on the half-sphere, when inserted. The force deforms and/or displaces the half-sphere and may result in a tight fit inside a second mechanical coupling structure 142 of coupling element 140 (not shown in the figure) that may be coupled with the first mechanical coupling structure 230. The first mechanical coupling structure 230 may have a second guide element (not shown in the figure) for directing the conducting element 240 towards the through-hole 238, the second guide element preferably being located close to the attachment section 236.

Figure 15 shows an exploded view of the first mechanical coupling structure 230 and the conducting element 240 of figure 14 ready for insertion into the attachment element 202 of figure 13. In this figure the cooperation and connection of the attachment element 202, the first mechanical coupling structure 230 and the conducting element 240 is easily recognizable, which together represent a base part of the holder 200.

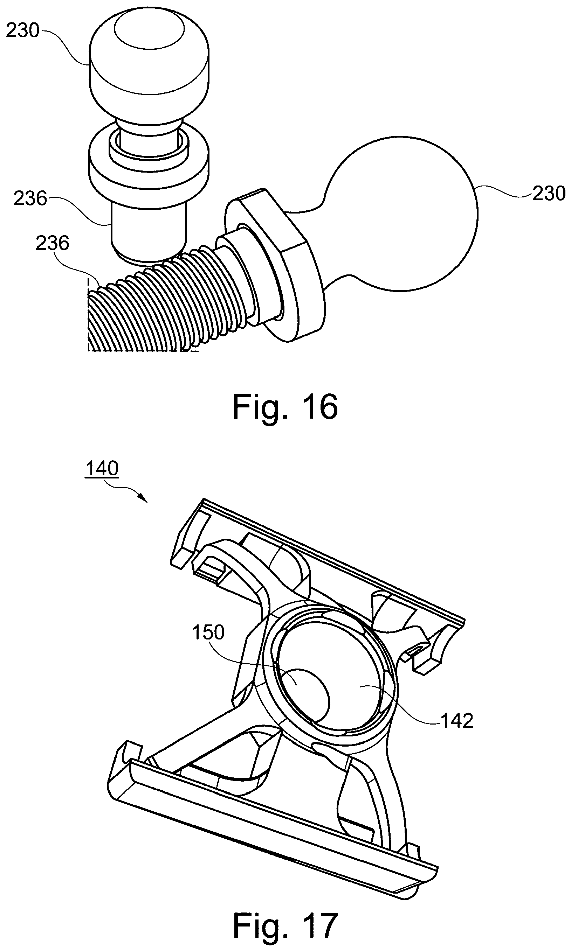

Figure 16 shows different views of further variants of the first mechanical coupling structure 230 that can be used in connection with the attachment element 202 of figure 13. Both variants have a solid ball head for the first mechanical coupling structure 230. The two variants differ only in the attachment section 236, one version having a threaded attachment section 236, the other one having a smooth attachment section 236. The smooth attachment section 236 may permit freely rotating the first mechanical coupling structure 230 in the attachment element 202, while the threaded version may require a tight fixing to the attachment element 202.

Figure 17 shows a first perspective view of the coupling element 140 shown in figure 14 and the second mechanical coupling structure 142 provided therein. The second mechanical coupling structure 142 is arranged in a central portion of coupling element 140 and may be configured to securely hold a ball head or other half- or fully spherical first coupling structures 230. To this end, the second mechanical coupling structure 142 may be at least partly flexible and enclose more than a half-sphere. A resilient securing mechanism may be provided for providing a clamping force (not shown in the figure). A hole 150 is provided central to the second mechanical coupling structure 142, which hole 150 permits passing of a conducting element 240 (not shown in the figure).

Figure 18 shows a second perspective view of the coupling element 140 of figure 17 and the third mechanical coupling structure 146 provided therewith. The third mechanical coupling structure 146 comprises four resilient snap hooks arranged in pairs on two parallel beams 152.

Figure 19 shows an exemplary support element 160 adapted for interfacing with or attaching to the third mechanical coupling structure 146 of the coupling element 140 shown in figures 14, 22 and 23. The support element 160 is of general flat rectangular shape and may have recesses 162, which may cooperate with corresponding protruding portions of the two parallel beams 152 of the coupling element 140, for, together with the third mechanical coupling structure 146, preventing any movement of the support element 160 when coupled with the coupling element 140. Support element 160 may have a hole 164, permitting passing of the conducting element 240. An apparatus 100 may be attached to the support element 160 by any suitable means, including adhesives, screws, rivets or the like. The housing 102 of the apparatus 100 may, however, be itself provided with coupling structures configured for coupling with the third coupling structures 146 of the coupling element 140.

It is readily apparent that the first mechanical coupling structure 230 presented in figures 9 to 12 and 15 to 16 can be used in connection with any of the attachment elements 202 presented in this specification and is not limited to the one exemplarily shown in figures 9 to 19.

Figure 20 shows a simplified block diagram of a gateway device 300 in accordance with the third aspect not part of the claimed invention. The gateway device comprises a microprocessor 302, volatile 304 and non-volatile memory 306, and a second wireless interface 308 that is adapted to provide electrical energy to first wireless interfaces 106 of one or more apparatus 100 in accordance with the first aspect of the invention. The gateway device 300 further comprises one or more antennas 310 and may optionally comprise a third interface 312, which may be configured for communication with a mobile device. The various elements of the gateway device 300 are connected via one or more data lines or buses 314.

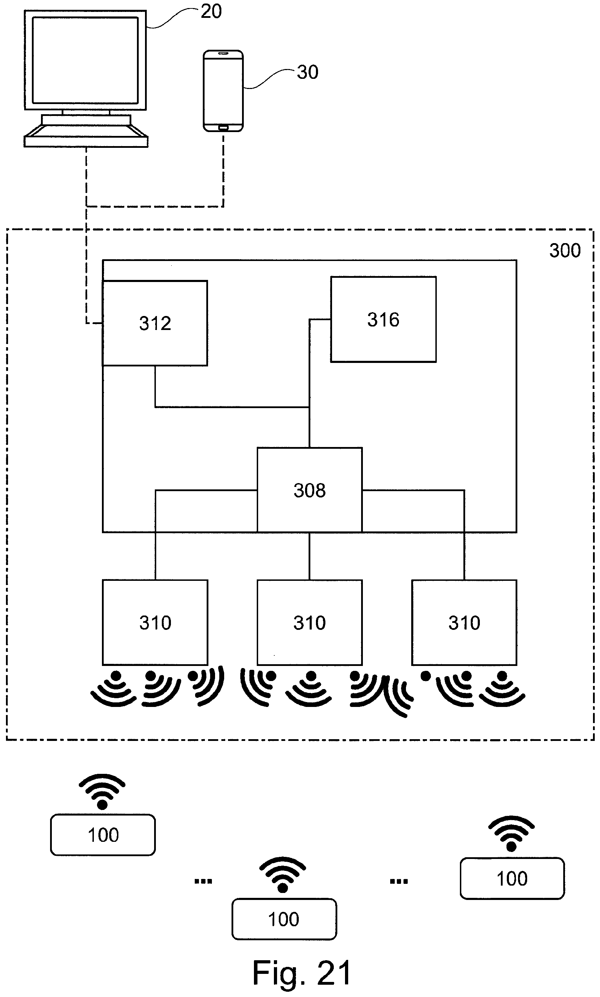

Figure 21 shows a schematic overview of a system in accordance with the fourth aspect not part of the claimed invention for monitoring properties of or in electrical installations. The system comprises a gateway device 300 in accordance with the third aspect not part of the claimed invention and one or more apparatus 100 in accordance with the first aspect of the invention, along with corresponding holders in accordance with the second aspect of the invention (not shown in the figure). The exemplary gateway device 300 shown in the figure comprises three antennas 310 that are connected to a second wireless interface 308 and that provide wireless connectivity with and electrical energy to the one or more apparatus 100. The antennas may provide beamforming and/or MU-MIMO-like communications, indicated by the various wireless communication symbols placed with each of the antennas. The exemplary gateway device 300 further comprises a data processing block 316, which may be implemented in software, hardware, or a combination thereof, and a third communication interface, which may be wired or wireless, for communicating with external data processing and/or storage apparatus, e.g., with computer 20 or mobile device 30. The communication with the external data processing and/or storage apparatus may be routed directly or via a further hardware or function block (not shown in the figure).

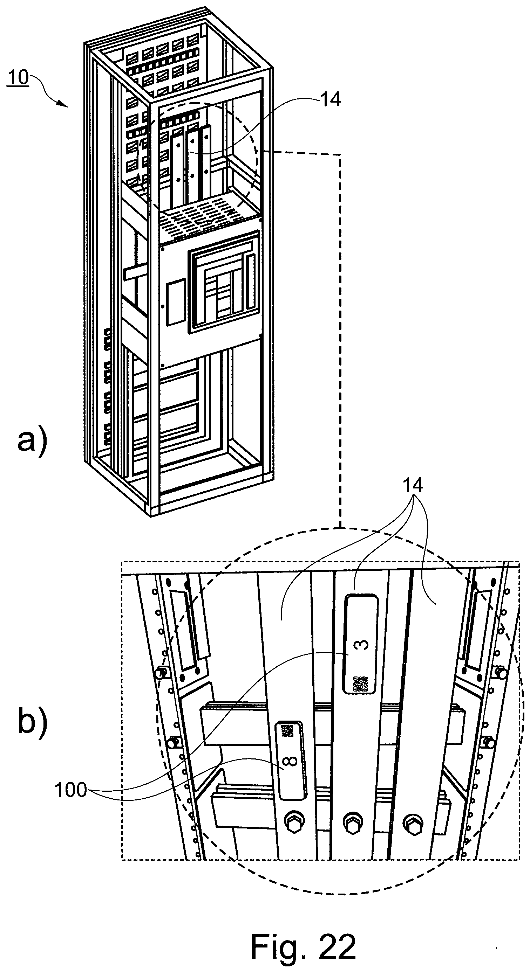

Figure 22 shows an exemplary electrical installation 10, and a detail thereof, in which apparatus 100 in accordance with the first aspect of the invention are mounted on power bus bars. The exemplary electrical installation comprises a cabinet that holds various electrical devices for switching and distributing electrical energy, inter alia electrical bus bars 14. The detailed view shows three bus bars 14, to two of which apparatus 100 in accordance with the first aspect of the invention are mounted, e.g., by means of adhesives.

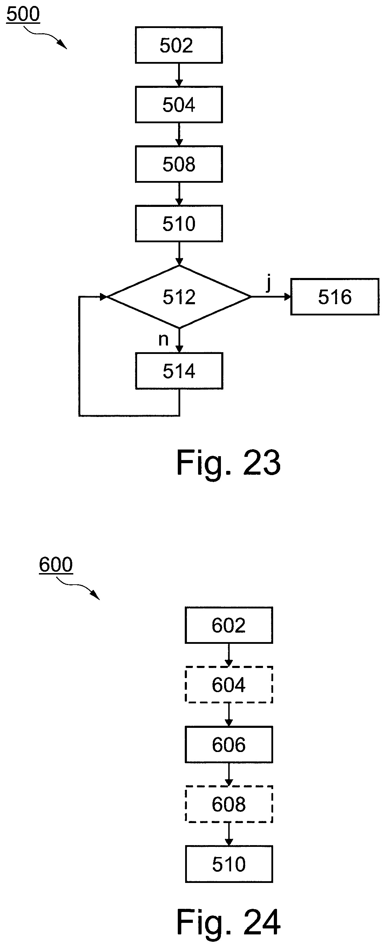

Figure 23 shows a flow diagram of an exemplary method 500 of installing an apparatus 100 in accordance with the first aspect of the invention in an electrical installation 10. After providing the apparatus 100 in step 502 the apparatus 100 is positioned, in step 540, in or next to a location in the electrical installation 10, in which a property of or in the electrical installation 10 is to be monitored. Positioning may comprise providing a holder 200 in accordance with the second aspect of the invention or providing any other means of attaching or mounting the apparatus 100 in the electrical installation 10. In step 506 electrical energy is wirelessly provided to the apparatus 100 via a gateway-device 300 of the electrical installation 10, which energy is received via a first wireless interface 106 of the apparatus 100. Next, in step 508, at least a field strength or a quality of the wireless connection between the apparatus 100 and the gateway-device 300 is determined in the apparatus 100 or in the gateway-device 300. In step 510 an indication is provided, by means of an indicator provided with the apparatus 100 or the gateway-device 300, or by means of a computer 10 or mobile device 20 communicatively connected with the gateway device 300, the indication representative of the field strength or the quality of the wireless connection and/or showing that the field strength and/or the quality of the wireless connection between the apparatus 100 and the gateway-device 300 exceeds a predetermined value or level. When the field strength and/or the quality of the wireless connection between the apparatus 100 and the gateway-device 300 lie below a predetermined value or level the orientation and/or the location of the apparatus 100 and/or a holder 200 in the electrical installation 10 is modified, in step 512, until the field strength and/or the quality of the wireless connection between the apparatus 100 and the gateway-device 300 exceeds the predetermined value or level. Once the field strength and/or the quality of the wireless connection between the apparatus 100 and the gateway-device 300 exceeds the predetermined value or level the apparatus 100 may be fixed in that location and orientation in step 516.

Figure 24 shows a flow diagram of an exemplary method 600 of operating a system in accordance with the fourth aspect not part of the claimed invention. In step 602 electrical energy is wirelessly provided from a gateway-device 300 to one or more apparatus 100. In optional step 604 the gateway-device 300 transmits data to the one or more apparatus 100, e.g., a polling command, configuration data or the like. A polling command may be required in case the apparatus 100 does not automatically transmit, upon receiving energy, whenever a communication channel is available and not busy, or when data from only one of multiple apparatus 100 is to be obtained. The latter option may be useful in case the multiple apparatus 100 do not provide a full wireless transmission protocol with congestion management. In step 606 the gateway device receives sensor data from one or more apparatus 100, representing a sensed property of an electrical installation 10 in which the system 400 is installed.

In optional step 608 the gateway device evaluates the received sensor data. The received and/or evaluated sensor data is transmitted, in step 610, from the gateway-device 300 to a further device, e.g., a computer 20 or a mobile device 30, via a third interface 312.

**LIST OF REFERENCE NUMERALS (PART OF THE DESCRIPTION)**

| | | | |
|---|---|---|---|
| 10 | electrical installation | 208 | locking element |
| 12 | structural element | 210 | coupling section |
| 14 | bus bar | 212 | hole |
| 20 | computer | 214 | surface |
| 30 | mobile device | 220 | recess |
| 100 | apparatus | 222 | hexagonal section |
| 102 | housing | 224 | securing arrangement |
| 104 | sensor | 226 | indicator |
| 106 | first wireless interface | 228 | ridge |
| 108 | antenna | 230 | first mechanical coupling structure |
| 110 | microprocessor | | |
| 112 | volatile memory | 234 | first guide element |
| 114 | non-volatile memory | 236 | attachment section |
| 116 | signal/data line/bus | 238 | through-hole |
| 118 | mechanical interface120 identification | 240 | conducting element |
| | | 300 | gateway device |
| 122 | indicator | 302 | microprocessor |
| 140 | coupling element | 304 | volatile memory |
| 142 | second mechanical coupling structure | 306 | non-volatile memory |
| | | 308 | second wireless interface |
| 146 | third mechanical coupling structure | 310 | antenna |
| | | 312 | third interface |
| 150 | hole | 314 | data line/bus |
| 152 | beam | 316 | data processing |
| 160 | support element | 500 | method |
| 162 | recess | 502 | providing apparatus |
| 164 | hole | 504 | positioning apparatus |
| 200 | holder | 506 | providing energy |
| 202 | attachment element | 508 | determining field strength/quality of connection |
| 204 | opposed sections | | |
| 206 | bridge section | 510 | provide indication |
| 512 | field strength above predetermined level/value? | 602 | providing energy |
| | | 604 | transmitting |
| 514 | modify orientation or position of apparatus | 606 | receiving |
| | | 608 | evaluating |
| 516 | fix apparatus | 610 | transmitting |
| 600 | method | | |

## Claims

1. Set comprising an apparatus (100) for sensing properties of and in an electrical installation (10) and a holder (200) adapted to be coupled with apparatus (100),
wherein the apparatus (100) comprises a housing (102), in which at least one sensor (104) and a first wireless interface (106) connected to an antenna (108) is arranged, which is adapted to wirelessly receive electrical energy and to wirelessly transmit a signal representing a property measured by the sensor (104),
wherein the housing (102) has a mechanical interface (118) that is adapted to be coupled with a coupling section (210) of the holder (200),
wherein the holder (200) comprises at least one attachment element (204) configured for mounting or attaching the holder (200) to a component of the electrical installation, wherein the coupling section (210) of the holder (200) is adapted for coupling with the interface (118) of the housing (102) of the apparatus (100), wherein the holder (200) is the sole mounting point of the housing (102) in the electrical installation (10),
wherein the mechanical interface (118) is arranged to provide access and/or functional contact of the coupling section (210) of the holder (200) coupled with the housing (102), to/with the at least one sensor (104)
**characterized in that**
the coupling section (210, 230) is adapted for coupling with the mechanical interface (118) of the housing (102) and is arranged to transfer or conduct a monitored property from outside of the housing (102) to the at least one sensor (104) inside of the housing (102).

2. Set according to claim 1, wherein the mechanical interface (110,118) is arranged to provide access and/or contact, of the first wireless interface (106) to the antenna (108) provided on or with the holder (200), or to a ground plane or connection located outside of the housing (102), through the coupling section (210) of the holder (200) received in the housing (102).

3. Set according to one of claims 1 or 2, further comprising an indicator (122) configurable to indicate a property of a wireless connection established with the first wireless interface (106).

4. Set according to one of claims 1 to 3, further comprising an identification (120) usable for communicatively addressing the apparatus (100) via the first wireless interface (106).

5. Set according to one of claims 1 to 4, wherein the housing (102) is made from a thermally, electrically, and/or magnetically shielding material, and/or wherein the housing (102) is made from an open-porous material.

6. Set according to one of claims 1 to 5, wherein the housing (102) is made from a transparent material or has a window made from a transparent material, and wherein the sensor (104) is a light-sensitive sensor.

7. Set according to claim 1, wherein the holder (200) further comprises an antenna and one or more contact elements connected with the antenna, for providing contact of the antenna with the first wireless interface (106) of the apparatus.

8. Set according to one of the preceding claims, wherein the at least one attachment element (204) is arranged to receive and be removably locked onto a structural element (12) of the electrical installation (10), or to be removably attached to a surface thereof.

9. Set according to claim 8, wherein the at least one attachment element (204) comprises two attachment sections extending from opposite ends of a connecting section (206), wherein at least one of the attachment sections is arranged to lock onto the structural element of the electrical installation (10) and/or is provided with means for exerting a force acting towards the respective other attachment section.

10. Set according to one of the preceding claims, wherein at least a portion of the coupling section (210) adapted for coupling with the interface (118) of the housing (102), or a part or an element of the holder (200) connecting the attachment element (204) and the coupling section (210) adapted for coupling with the interface (118) of the housing (102), is movable or manually deformable, or wherein the coupling section (210, 230) is configured for movably coupling with the mechanical interface (118) of the housing (102) or with a mechanical coupling structure (142) of a coupling element (140) to which the housing (102) is ultimately mounted.

11. Electrical installation (10) comprising a set according to one of the preceding claims.

12. Method (500) of installing an apparatus (100) in an electrical installation (10) in accordance with claim 11, comprising:
- providing (502) the apparatus (100),
- positioning (504) the apparatus in or next to a location in the electrical installation (10), in which a property of or in the electrical installation (10) is to be monitored,
- providing (506) electrical energy to the apparatus (100) via a gateway-device (300) of the electrical installation (10), which energy is received via a first wireless interface (106) of the apparatus (100),
- determining (508), in the apparatus (100) or in the gateway-device (300), at least a field strength or a quality of the wireless connection between the apparatus (100) and the gateway-device (300),
- providing (510), by the apparatus (100) or by or via the gateway-device (300), an indication of the field strength or the quality of the wireless connection and/or an indication showing that the field strength and/or the quality of the wireless connection between the apparatus (100) and the gateway-device (300) exceeds a predetermined value or level,
wherein the method further comprises, whenever the field strength and/or the quality of the wireless connection between the apparatus (100) and the gateway-device (300), lie below the predetermined value or level, the method further comprises:
- modifying (514) an orientation and/or a location of the apparatus (100) and/or a holder (200) of the set according to one or several of claims 1 to 10 in the electrical installation (10) and/or modifying the position of the apparatus (100) and/or the holder (200) in the electrical installation (10), until the field strength and/or the quality of the wireless connection between the apparatus (100) and the gateway-device (300) exceeds the predetermined value or level.

13. Method (600) of operating a system (400), the system comprising a set according one or several of claims 1 to 10 and a gateway device (300), the method comprising:
- wirelessly providing (602), by the gateway-device (300), electrical energy to the apparatus (100) of said set,
- receiving (606), by the gateway-device (300) and from the apparatus (100), sensor data representing a sensed property of an electrical installation (10) in which the system (400) is installed, and
- transmitting (610), by the gateway-device (300) and via a third interface (312), the received sensor data and/or a result of an evaluation of the sensor data in the gateway-device (300), to a further device (20, 30).

## Patentansprüche

1. Anordnung, umfassend ein Gerät (100) zum Erfassen von Eigenschaften einer und in einer elektrischen Anlage (10) sowie einen Halter (200), der dazu ausgelegt ist, mit dem Gerät (100) gekoppelt zu werden,
wobei das Gerät (100) ein Gehäuse (102) umfasst, in dem mindestens ein Sensor (104) und eine erste drahtlose Schnittstelle (106), die mit einer Antenne (108) verbunden ist, angeordnet sind, die dazu ausgelegt ist, drahtlos elektrische Energie zu empfangen und ein eine durch den Sensor (104) gemessene Eigenschaft repräsentierendes Signal drahtlos zu übertragen,
wobei das Gehäuse (102) eine mechanische Schnittstelle (118) aufweist, die dazu ausgelegt ist, mit einem Koppelabschnitt (210) des Halters (200) gekoppelt zu werden,
wobei der Halter (200) mindestens ein Befestigungselement (204) umfasst, das zum Montieren oder Befestigen des Halters (200) an einer Komponente der elektrischen Anlage ausgelegt ist, wobei der Koppelabschnitt (210) des Halters (200) dazu ausgelegt ist, mit der Schnittstelle (118) des Gehäuses (102) des Geräts (100) gekoppelt zu werden, wobei der Halter (200) der einzige Montagepunkt des Gehäuses (102) in der elektrischen Anlage (10) ist, wobei die mechanische Schnittstelle (118) so angeordnet ist, dass sie Zugang und/oder funktionellen Kontakt des mit dem Gehäuse (102) gekoppelten Koppelabschnitts (210) des Halters (200) zu/mit dem mindestens einen Sensor (104) bereitstellt,
**dadurch gekennzeichnet, dass**
der Koppelabschnitt (210, 230) dazu ausgelegt ist, mit der mechanischen Schnittstelle (118) des Gehäuses (102) gekoppelt zu werden, und so angeordnet ist, dass er eine überwachte Eigenschaft von außerhalb des Gehäuses (102) zu dem mindestens einen Sensor (104) innerhalb des Gehäuses (102) überträgt oder leitet.

2. Anordnung nach Anspruch 1, wobei die mechanische Schnittstelle (110, 118) dazu angeordnet ist, Zugang und/oder Kontakt der ersten drahtlosen Schnittstelle (106) zu der an oder mit dem Halter (200) vorgesehenen Antenne (108) oder zu einer außerhalb des Gehäuses (102) angeordneten Massefläche oder Verbindung durch den in dem Gehäuse (102) aufgenommenen Koppelabschnitt (210) des Halters (200) bereitzustellen.

3. Anordnung nach einem der Ansprüche 1 oder 2, ferner umfassend einen Indikator (122), der konfigurierbar ist, um eine Eigenschaft einer mit der ersten drahtlosen Schnittstelle (106) hergestellten drahtlosen Verbindung anzuzeigen.

4. Anordnung nach einem der Ansprüche 1 bis 3, ferner umfassend eine Identifikation (120), die verwendbar ist, um das Gerät (100) über die erste drahtlose Schnittstelle (106) kommunikativ zu adressieren.

5. Anordnung nach einem der Ansprüche 1 bis 4, wobei das Gehäuse (102) aus einem thermisch, elektrisch und/oder magnetisch abschirmenden Material hergestellt ist und/oder wobei das Gehäuse (102) aus einem offenporigen Material hergestellt ist.

6. Anordnung nach einem der Ansprüche 1 bis 5, wobei das Gehäuse (102) aus einem transparenten Material hergestellt ist oder ein Fenster aus einem transparenten Material aufweist, und wobei der Sensor (104) ein lichtempfindlicher Sensor ist.

7. Anordnung nach Anspruch 1, wobei der Halter (200) ferner eine Antenne und ein oder mehrere Kontaktelemente umfasst, die mit der Antenne verbunden sind, um einen Kontakt der Antenne mit der ersten drahtlosen Schnittstelle (106) des Geräts bereitzustellen.

8. Anordnung nach einem der vorhergehenden Ansprüche, wobei das mindestens eine Befestigungselement (204) so angeordnet ist, dass es ein Strukturelement (12) der elektrischen Anlage (10) aufnimmt und lösbar daran verriegelt wird oder lösbar an einer Oberfläche davon befestigt wird.

9. Anordnung nach Anspruch 8, wobei das mindestens eine Befestigungselement (204) zwei Befestigungsabschnitte umfasst, die sich von entgegengesetzten Enden eines Verbindungsabschnitts (206) erstrecken, wobei mindestens einer der Befestigungsabschnitte so angeordnet ist, dass er an dem Strukturelement der elektrischen Anlage (10) verriegelt wird und/oder mit Mitteln versehen ist, um eine Kraft auszuüben, die in Richtung des jeweils anderen Befestigungsabschnitts wirkt.

10. Anordnung nach einem der vorhergehenden Ansprüche, wobei mindestens ein Teil des Koppelabschnitts (210), der zum Koppeln mit der Schnittstelle (118) des Gehäuses (102) ausgelegt ist, oder ein Teil oder Element des Halters (200), das das Befestigungselement (204) und den zum Koppeln mit der Schnittstelle (118) des Gehäuses (102) ausgelegten Koppelabschnitt (210) verbindet, beweglich oder manuell verformbar ist, oder wobei der Koppelabschnitt (210, 230) zum beweglichen Koppeln mit der mechanischen Schnittstelle (118) des Gehäuses (102) oder mit einer mechanischen Koppelstruktur (142) eines Koppelelements (140) ausgelegt ist, an dem das Gehäuse (102) letztlich montiert ist.

11. Elektrische Anlage (10), umfassend eine Anordnung nach einem der vorhergehenden Ansprüche.

12. Verfahren (500) zum Installieren eines Geräts (100) in einer elektrischen Anlage (10) gemäß Anspruch 11, umfassend:
- Bereitstellen (502) des Geräts (100),
- Positionieren (504) des Geräts in oder neben einem Ort in der elektrischen Anlage (10), an dem eine Eigenschaft der oder in der elektrischen Anlage (10) überwacht werden soll,
- Bereitstellen (506) elektrischer Energie für das Gerät (100) über eine Gateway-Vorrichtung (300) der elektrischen Anlage (10), wobei die Energie über eine erste drahtlose Schnittstelle (106) des Geräts (100) empfangen wird,
- Bestimmen (508), in dem Gerät (100) oder in der Gateway-Vorrichtung (300), mindestens einer Feldstärke oder einer Qualität der drahtlosen Verbindung zwischen dem Gerät (100) und der Gateway-Vorrichtung (300),
- Bereitstellen (510), durch das Gerät (100) oder durch oder über die Gateway-Vorrichtung (300), einer Anzeige der Feldstärke oder der Qualität der drahtlosen Verbindung und/oder einer Anzeige, die zeigt, dass die Feldstärke und/oder die Qualität der drahtlosen Verbindung zwischen dem Gerät (100) und der Gateway-Vorrichtung (300) einen vorbestimmten Wert oder Pegel überschreitet,
wobei das Verfahren ferner, wann immer die Feldstärke und/oder die Qualität der drahtlosen Verbindung zwischen dem Gerät (100) und der Gateway-Vorrichtung (300) den vorbestimmten Wert oder Pegel unterschreiten, ferner umfasst:
- Verändern (514) einer Ausrichtung und/oder eines Orts des Geräts (100) und/oder eines Halters (200) der Anordnung nach einem oder mehreren der Ansprüche 1 bis 10 in der elektrischen Anlage (10) und/oder Verändern der Position des Geräts (100) und/oder des Halters (200) in der elektrischen Anlage (10), bis die Feldstärke und/oder die Qualität der drahtlosen Verbindung zwischen dem Gerät (100) und der Gateway-Vorrichtung (300) den vorbestimmten Wert oder Pegel überschreitet.

13. Verfahren (600) zum Betreiben eines Systems (400), wobei das System eine Anordnung nach einem oder mehreren der Ansprüche 1 bis 10 und eine Gateway-Vorrichtung (300) umfasst, wobei das Verfahren umfasst:
- drahtloses Bereitstellen (602), durch die Gateway-Vorrichtung (300), von elektrischer Energie für das Gerät (100) der Anordnung,
- Empfangen (606), durch die Gateway-Vorrichtung (300) und von dem Gerät (100), von Sensordaten, die eine erfasste Eigenschaft einer elektrischen Anlage (10) repräsentieren, in der das System (400) installiert ist, und
- Übertragen (610), durch die Gateway-Vorrichtung (300) und über eine dritte Schnittstelle (312), der empfangenen Sensordaten und/oder eines Ergebnisses einer Auswertung der Sensordaten in der Gateway-Vorrichtung (300) an eine weitere Vorrichtung (20, 30).

## Revendications

1. Ensemble comprenant un appareil (100) de détection de propriétés de et dans une installation électrique (10) et un support (200) conçu pour être couplé à l'appareil (100),
dans lequel l'appareil (100) comprend un boîtier (102), dans lequel sont disposés au moins un capteur (104) et une première interface sans fil (106) connectée à une antenne (108) conçue pour recevoir sans fil de l'énergie électrique et pour transmettre sans fil un signal représentant une propriété mesurée par le capteur (104), dans lequel le boîtier (102) comporte une interface mécanique (118) conçue pour être couplée avec une section de couplage (210) du support (200),
dans lequel le support (200) comprend au moins un élément de fixation (204) configuré pour monter ou fixer le support (200) sur un composant de l'installation électrique, dans lequel la section de couplage (210) du support (200) est conçue pour se coupler à l'interface (118) du boîtier (102) de l'appareil (100), dans lequel le support (200) est le seul point de montage du boîtier (102) dans l'installation électrique (10),
dans lequel l'interface mécanique (118) est agencée pour fournir un accès et/ou un contact fonctionnel de la section de couplage (210) du support (200) couplée avec le boîtier (102), au/avec le ou les capteurs (104) **caractérisé en ce que**
la section de couplage (210, 230) est conçue pour se coupler à l'interface mécanique (118) du boîtier (102) et est agencée pour transférer ou conduire une propriété surveillée de l'extérieur du boîtier (102) vers le ou les capteurs (104) à l'intérieur du boîtier (102).

2. Ensemble selon la revendication 1, dans lequel l'interface mécanique (110,118) est agencée pour fournir un accès et/ou un contact de la première interface sans fil (106) avec l'antenne (108) prévue sur ou avec le support (200), ou avec un plan ou une connexion de masse situé(e) à l'extérieur du boîtier (102), par l'intermédiaire de la section de couplage (210) du support (200) reçue dans le boîtier (102).

3. Ensemble selon l'une des revendications 1 ou 2, comprenant en outre un indicateur (122) pouvant être configuré pour indiquer une propriété d'une connexion sans fil établie avec la première interface sans fil (106).

4. Ensemble selon l'une des revendications 1 à 3, comprenant en outre une identification (120) utilisable pour s'adresser en communication à l'appareil (100) par le biais de la première interface sans fil (106).

5. Ensemble selon l'une des revendications 1 à 4, dans lequel le boîtier (102) est réalisé dans un matériau de blindage thermique, électrique et/ou magnétique, et/ou dans lequel le boîtier (102) est réalisé dans un matériau à ports ouverts.

6. Ensemble selon l'une des revendications 1 à 5, dans lequel le boitier (102) est réalisé dans un matériau transparent ou présente une fenêtre réalisée dans un matériau transparent, et dans lequel le capteur (104) est un capteur sensible à la lumière.

7. Ensemble selon la revendication 1, dans lequel le support (200) comprend en outre une antenne et un ou plusieurs éléments de contact connectés à l'antenne, pour assurer le contact de l'antenne avec la première interface sans fil (106) de l'appareil.

8. Ensemble selon l'une des revendications précédentes, dans lequel le ou les éléments de fixation (204) sont agencés pour recevoir et être verrouillés de manière amovible sur un élément de structure (12) de l'installation électrique (10), ou pour être fixés de manière amovible sur une surface de celle-ci.

9. Ensemble selon la revendication 8, dans lequel le ou les éléments de fixation (204) comprennent deux sections de fixation s'étendant à partir d'extrémités opposées d'une section de connexion (206), au moins l'une des sections de fixation étant agencée pour se verrouiller sur l'élément de structure de l'installation électrique (10) et/ou étant munie de moyens pour exercer une force agissant en direction de l'autre section de fixation respective.

10. Ensemble selon l'une des revendications précédentes, dans lequel au moins une partie de la section de couplage (210) conçue pour se coupler à l'interface (118) du boîtier (102), ou une partie ou un élément du support (200) connectant l'élément de fixation (204) et la section de couplage (210) conçue pour se coupler à l'interface (118) du boîtier (102), est mobile ou déformable manuellement, ou dans lequel la section de couplage (210, 230) est configurée pour se coupler de manière mobile à l'interface mécanique (118) du boîtier (102) ou avec une structure de couplage mécanique (142) d'un élément de couplage (140) sur lequel le boîtier (102) est finalement monté.

11. Installation électrique (10) comprenant un ensemble selon l'une des revendications précédentes.

12. Procédé (500) d'installation d'un équipement (100) dans une installation électrique (10) selon la revendication 11, comprenant :
- la fourniture (502) de l'appareil (100),
- le positionnement (504) de l'appareil dans ou à côté d'un emplacement de l'installation électrique (10) auquel une propriété de ou dans l'installation électrique (10) doit être surveillée,
- la fourniture (506) d'énergie électrique à l'appareil (100) par le biais d'un dispositif passerelle (300) de l'installation électrique (10), ladite énergie étant reçue par le biais d'une première interface sans fil (106) de l'appareil (100),
- la détermination (508) dans l'appareil (100) ou dans le dispositif passerelle (300) d'au moins une intensité de champ ou une qualité de la connexion sans fil entre l'appareil (100) et le dispositif passerelle (300),
- la fourniture (510), par l'appareil (100) ou par ou par le biais du dispositif passerelle (300), d'une indication de l'intensité de champ ou de la qualité de la connexion sans fil et/ou d'une indication montrant que l'intensité de champ et/ou la qualité de la connexion sans fil entre l'appareil (100) et le dispositif passerelle (300) dépasse une valeur ou un niveau prédéterminé,
dans lequel le procédé comprend en outre, chaque fois que l'intensité de champ et/ou la qualité de la connexion sans fil entre l'appareil (100) et le dispositif passerelle (300) sont inférieures à la valeur ou au niveau prédéterminé :
- la modification (514) d'une orientation et/ou d'un emplacement de l'appareil (100) et/ou d'un support (200) de l'ensemble selon une ou plusieurs des revendications 1 à 10 dans l'installation électrique (10) et/ou la modification de la position de l'appareil (100) et/ou du support (200) dans l'installation électrique (10), jusqu'à ce que l'intensité de champ et/ou la qualité de la connexion sans fil entre l'appareil (100) et le dispositif passerelle (300) dépasse la valeur ou le niveau prédéterminé.

13. Procédé (600) de fonctionnement d'un système (400), le système comprenant un ensemble selon une ou plusieurs des revendications 1 à 10 et un dispositif passerelle (300), le procédé comprenant :
- la fourniture sans fil (602), par le dispositif passerelle (300), d'énergie électrique à l'appareil (100) dudit ensemble,
- la réception (606), par le dispositif passerelle (300) et depuis l'appareil (100), de données de capteur représentant une propriété détectée d'une installation électrique (10) dans laquelle est installé le système (400), et
- la transmission (610), par le dispositif passerelle (300) et par le biais d'une troisième interface (312), des données de capteur reçues et/ou d'un résultat d'une évaluation des données de capteur dans le dispositif passerelle (300) à un autre dispositif (20, 30).
